Europäisches Patentamt

European Patent Office

Office européen des brevets

(19)

(11) Veröffentlichungsnummer: **0 255 662**
**B1**

(12) **EUROPÄISCHE PATENTSCHRIFT**

(45) Veröffentlichungstag der Patentschrift:
**09.05.90**

(21) Anmeldenummer: **87110636.5**

(22) Anmeldetag: **22.07.87**

(51) Int. Cl.⁵: **F16J 15/36, F16J 15/34**

(54) **Dichtung.**

(30) Priorität: **04.08.86 DE 3626383**

(43) Veröffentlichungstag der Anmeldung:
**10.02.88 Patentblatt 88/6**

(45) Bekanntmachung des Hinweises auf die Patenterteilung:
**09.05.90 Patentblatt 90/19**

(84) Benannte Vertragsstaaten:
**AT BE CH DE ES IT LI NL SE**

(56) Entgegenhaltungen:
**DE-A- 1 450 277**
**DE-C- 937 324**
**FR-A- 1 056 419**
**GB-A- 284 134**
**US-A- 2 354 478**

(73) Patentinhaber: **Siemens Aktiengesellschaft,
Wittelsbacherplatz 2, D-8000 München 2(DE)**

(72) Erfinder: **Haberberger, Vitus, Dipl.-Ing. (FH),
Hauptstrasse 20, D-8522 Herzogenaurach(DE)**

ACTORUM AG

**Beschreibung**

Die Erfindung betrifft eine Dichtung für ein einen drehbaren Rohrkörper einschließendes Gehäuse, insbesondere für einen Trommelofen in Pyrolyseanlagen, mit unter Federdruck anliegenden Dichtkörpern. Diese Dichtung muß insbesondere für den Fall der vorgenannten Trommelöfen große Wärmedehnungen auffangen können, denn solche Trommeln haben Durchmesser im Bereich von einem Meter und Längen von mehreren Metern. Daraus ergeben sich angesichts der Schweltemperaturen von 500 bis 700 °C Wärmedehnungen von mehr als 10 cm, die ohne Nachlassen der Dichtigkeit aufgenommen werden müssen. Bei Pyrolyseanlagen muß nämlich vermieden werden, daß bei Unterdruckbetrieb Luft hinzutritt, die zu Verbrennungen der Schwelgase führen würde. Eine andere Beanspruchung kann darin liegen, daß auf der Eintrittsseite der Schweltrommel Flüssigkeit gestaut wird, die nicht austreten darf.

Aus der US-A 2 354 478 ist eine Dichtung für ein einen drehbaren Körper einschließendes Gehäuse bekannt. Bei dieser Anordnung ist an dem Körper ein diesen konzentrisch umgebender Dichtungsring mit einer zur Körperachse rechtwinkligen Dichtungsfläche befestigt. Außerdem ist an dem Gehäuse eine parallel zur Körperachse bewegliche Halterung für einen Gegen-Dichtungsring mit Abstand von der Gehäusewand vorgesehen. Ein Zwischenraum zwischen dem Gegen-Dichtungsring und der Gehäusewand ist mit einem den Körper umgebenden Balg dicht abgeschlossen.

Der Erfindung liegt nun die Aufgabe zugrunde, eine Dichtungsanordnung zu schaffen, die für große Durchmesser geeignet ist, die bespielsweise bei Drehrohröfen mit Durchmessern von einem Meter und mehr auftreten. Derartige Drehrohr- oder Trommelöfen werden neuerdings in Pyrolyseanlagen und seit langem in der chemischen Industrie oder bei der Erzaufbereitung eingesetzt.

Bei einer Dichtung für ein einen drehbaren Körper einschließendes Gehäuse, insbesondere für einen Trommelofen in Pyrolyseanlagen, mit unter Federdruck anliegenden Dichtkörpern, wobei an dem Körper ein diesen konzentrisch umgebender Dichtungsring mit einer zur Körperachse rechtwinkligen Dichtungsfläche befestigt ist, wobei an dem Gehäuse eine parallel zur Körperachse bewegliche Halterung für einen Gegen- Dichtungsring mit Abstand von der Gehäusewand befestigt ist, und wobei ein Zwischenraum zwischen dem Gegen-Dichtungsring und der Gehäusewand mit einem den Körper umgebenden Balg dicht abgeschlossen ist, wird diese Aufgabe erfindungsgemäß dadurch gelöst,

– daß der Körper ein Rohrkörper ist und der Gegen-Dichtungsring unter Federdruck in Richtung der Rohrachse gedrückt wird,

– daß die Halterung mehrere um den Umfang des Rohrkörpers verteilte Stangen umfaßt, die an der Gehäusewand befestigt sind und sich parallel zur Rohrachse durch Bohrungen eines den Gegen-Dichtungsring tragenden Halteringes erstrecken und

– daß die Stangen von Federn umgeben sind, die sich einerseits an der Gehäusewand und andererseits an dem Haltering abstützen.

Auf diesen Stangen gleitet die Halterung für den Gegenring beim Ausgleich von axialen Bewegungen des Rohrkörpers. Dabei kann durch eine Vielzahl von Stangen ein Verkanten des Halteringes vermieden werden. Ein Kugelgelenk kann zusätzlich Versätze ausgleichen.

Bei dieser Anordnung wird die axiale Dehnung über einen Balg aufgenommen, so daß eine in axialer Richtung bewegliche Abdichtung überhaupt entfällt. Der Balg kann aus Kunststoff bestehen und unter Zwischenlage von formgebenden Zwischenblechen festgeklemmt sein. Er kann aber auch in bekannter Weise als Metallbalg ausgeführt sein. Bei einem Kunststoffbalg empfiehlt es sich, den Balg leicht vorzuwölben, z.B. dadurch, daß er an mindestens einem Ende an einen Flansch mit einer radialen Befestigungsebene angebracht wird. Damit kann man nämlich eine Aufwölbung erreichen, die axiale Bewegungen des an sich zylindrischen Kunststoffbalges erleichtert.

Radiale Verschiebungen werden von der zur Rohrachse rechtwinkligen Dichtungsfläche zwischen Dichtungsring und Gegen-Dichtungsring aufgenommen, die aneinander gleiten. Dabei kann zur Verringerung der Reibung einer von den Dichtungsringen mit einer Schmiernut an der Dichtungsfläche versehen sein. Die Schmiernut ist vorzugsweise mit einem zur Außenseite des Dichtungsringes führenden Schmierkanal versehen. Als Schmiermittel kommen insbesondere temperaturbeständige Fette, z.B. auf der Basis von Graphit oder Molybdensulfid, in Frage.

Eine besonders vorteilhafte Ausführungsform der Erfindung besteht darin, daß der Dichtungsring an dem Rohrkörper mit einem diesen umgebenden Rohrstück befestigt, dessen Länge in Richtung der Rohrachse mehrfach größer als die Dicke des Dichtungsringes ist. Mit einem solchem Rohrstück gelingt es, von dem Dichtungsring die unter Umständen hohen Temperaturen des Rohrkörpers fernzuhalten, die sonst die Schmiereigenschaften beeinträchtigen könnten.

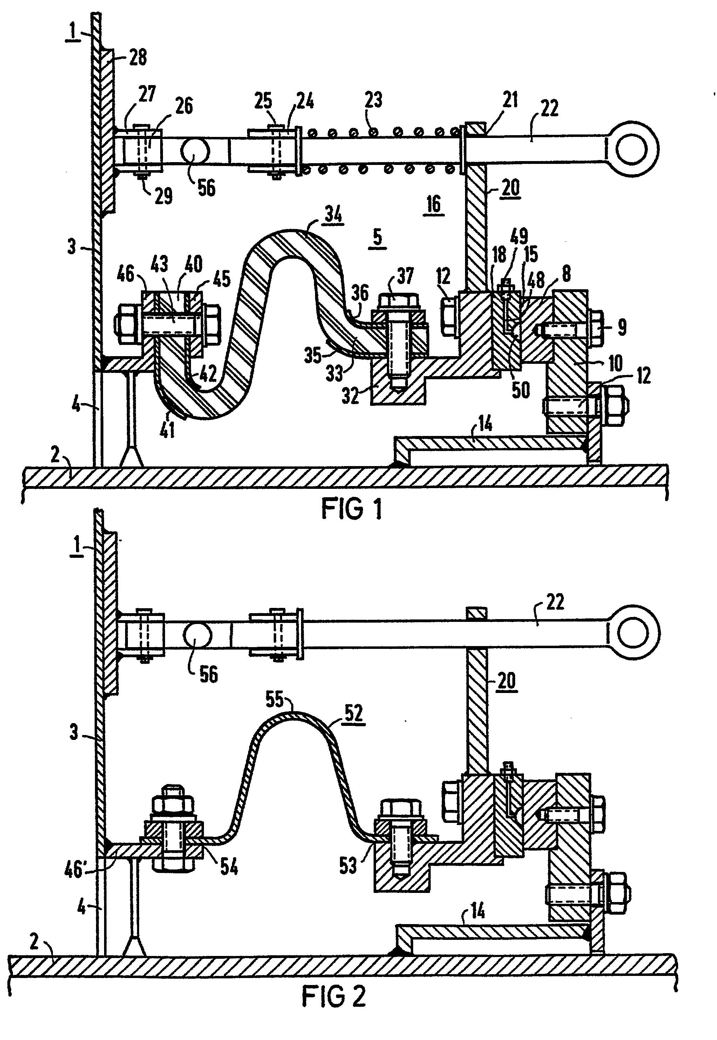

Zur näheren Erläuterung der Erfindung werden anhand der Zeichnung zwei Ausführungsbeispiele beschrieben, die in den Figuren 1 und 2 als Ausschnitt von der Abdichtung der Schweltrommel einer Pyrolyseanlage dargestellt sind.

In Figur 1 ist mit 1 das Schwelgasgehäuse eines Schwelofens bezeichnet, in dem Hausmüll bei Temperaturen von ca. 500 °C pyrolytisch zersetzt wird. Das Gehäuse 1 ist nur in dem Bereich zu sehen, in dem eine rotierende Schweltrommel 2 als Rohrkörper dicht hineingeführt ist.

Die Trommel 2 hat einen Durchmesser von z.B. 60 cm, ihre Wandstärke beträgt 0,7 cm und wird als Austragsrohr der Schweltrommel 2 bezeichnet. Die Durchtrittsstelle durch die Wand 3 des Gehäuses 1, in der eine Öffnung 4 vorgesehen ist, ist mit einer als Ganzes mit 5 bezeichneten erfindungsgemäßen Dichtung abgedichtet, damit auch bei einem Unterdruck von 0,002 bar kein Luftsauerstoff eintreten kann, der den unterstöchiometrischen Betrieb stören und zu Verbrennungen führen würde.

Die Dichtung 5 umfaßt einen stählernen Dichtungsring 8, der mit der Trommel 2 verbunden ist. Dazu ist der Dichtungsring 8 mit Schrauben 9 an einer Scheibe 10 befestigt, die ihrerseits mit Schrauben 12 an einem an die Trommel 2 angeschweißten Rohrstück 14 angeschraubt ist. Das Rohrstück 14 ist über eine Länge, die das Fünffache der Dicke des Dichtungsringes 8 beträgt, mit Abstand parallel zur Wand der Trommel 2 geführt, so daß die Wärmeeinwirkung von der Trommel 2 auf den Dichtungsring 8 begrenzt ist. Außerdem ist die Anordnung elastisch und die durch die hohen Temperaturen bedingten Spannungen werden abgebaut, so daß es zu keinen Verwertungen kommt.

Der Dichtungsring 8 besteht aus drei Segmenten. Er bildet eine Dichtungsfläche 15, die rechtwinklig zur Achse der Trommel 2 liegt. Gegen diese Dichtungsfläche legt sich ein metallischer Gegen-Dichtungsring 18, der aus einem Teil besteht und von einer mit dem Gehäuse 1 verbundenen Halterung 16 getragen wird.

Zur Halterung 16 gehört ein Haltering 20, an dem der Gegen-Dichtungsring 18 mit Schrauben 19 befestigt ist und der mit Bohrungen 21 auf mehreren, gleichmäßig um den Umfang der Trommel 2 verteilten Stangen 22 verschiebbar sitzt. Die Stangen 22 tragen Druckfedern 23, die gegen den Haltering 20 einerseits drücken. Die andere Seite der Federn 23 drückt auf eine Hülse 24, die an den Stangen 22 mit einem Stift 25 befestigt ist. Das freie Ende 26 der Stangen 22 greift in eine Hülse 27, die mit der Gehäusewand 1 über eine Zwischenplatte 28 verschweißt ist. Ein Stift 29 sichert die Stange 22 in der Hülse 27. Dazwischen ist ein Kugelgelenk 56 geschaltet, daß Versätze, die durch Montage oder unterschiedliche Differenzdehnungen entstehen, ausgeglichen werden.

An einem dem Gehäuse 1 zugekehrten zylindrischen Absatz 32 des Halteringes 20 ist das eine Ende 33 eines Kunststoffbalges 34 unter Zwischenlage von Formblechen 35 und 36 mit einer Schraube 37 festgeklemmt. Der Balg 34 besteht z.B. aus Elastomeren. Er hat eine Dicke von 2 cm und eine Länge von 20 cm, sein Durchmesser beträgt 80 cm. Das andere Ende 40 des Balges 34 ist mit einer radialen Befestigungsebene am Gehäuse 1 angebracht. Dieses Ende ist mit Formblechen 41 und 42 nach außen gewölbt, die mit Schrauben 43 über einem Preßring 45 gegen einen Flansch 46 gepreßt werden, der die Öffnung 4 in der Wand 3 umgibt. Die Befestigung des Balges 34 am Gehäuse 1 kann aber besonders bei geringen Verschiebungen auch in der gleichen Weise wie am Teil 32 erfolgen.

Wie man sieht, hat die neue Dichtung nur eine einzige, radiale Dichtungsfläche 15, an der sich die Dichtungsringe 8 und 18 bei unterschiedlichen Wärmedehnungen aneinander verschieben können. Die dort auftretende Reibung kann durch ein Schmiermittel verringert werden, das durch einen Schmierkanal 48 mit einem Schmiernippel 49 zu einer Schmiernut 50 in der Mitte des Dichtungsringes 80 geführt werden kann. Das Schmiermittel kann so ausgewählt werden, daß die Dichtung an der Dichtungsfläche 15 verbessert wird.

Axiale Dehnungen der Trommel 2 werden durch eine Verformung des Balges 34 aufgenommen, der aus der dargestellten Lage in eine Strecklage gebracht werden kann, wobei Wärmedehnungen von mehr als 10 cm ohne unzulässige Kräfte aufgenommen werden können. Die Bewegung erfolgt unter der Wirkung der Federn 23, die insgesamt mit einer Kraft von 1000 N auf die Dichtungsfläche 15 einwirken. Damit ergibt sich eine sichere und weitgehend verschleißarme Dichtung 5.

Bei dem Ausführungsbeispiel nach Figur 2 ist anstelle des Kunststoffbalges 34 ein Metallbalg 52 zwischen dem Haltering 20 und dem die Öffnung 4 umgebenden Flansch 46' angeordnet. Der Metallbalg 52 ist in Form eines einwelligen Kompensators aus z.B. Edelstahl 1.4571 hergestellt. Er hat eine Wanddicke von 1 mm, so daß eine ausreichende Flexibilität gegeben ist. Die Enden 53 und 54 des Metallbalges 52 sind in gleicher Weise mit einer ringförmigen Klemmfläche befestigt, die konzentrisch zur Trommel 2 liegt. Dies liegt daran, daß der Metallbalg 52 ohnehin mit einer Wölbung 55 hergestellt wird. Es können auch Metallbalge 52 mit mehreren Wölbungen verwendet werden, wenn große Längenänderungen aufzunehmen sind. Bei genügender Elastizität des Metallbalges können besondere Federn zur Anpressung der Dichtringe 8, 18 auch entfallen. Die Anpressung der Dichtringe 8, 18 kann ferner auch über Druckluftzylinder erfolgen.

**Patentansprüche**

1. Dichtung für ein einen drehbaren Körper einschließendes Gehäuse, insbesondere für einen Trommelofen in Pyrolyseanlagen, mit unter Federdruck anliegenden Dichtkörpern, wobei an dem Körper ein diesen konzentrisch umgebender Dichtungsring (8) mit einer zur Körperachse rechtwinkligen Dichtungsfläche (15) befestigt ist, wobei an dem Gehäuse (1) eine parallel zur Körperachse bewegliche Halterung (16) für einen Gegen-Dichtungsring (18) mit Abstand von der Gehäusewand (3) befestigt ist, und wobei ein Zwischenraum zwischen dem Gegen-Dichtungsring (18) und der Gehäusewand (3) mit mit einem den Körper (2) umgebenden Balg (34, 52) dicht abgeschlossen ist, dadurch gekennzeichnet,
   – daß der Körper ein Rohrkörper (2) ist und der Gegendichtungsring (18) unter Federdruck in Richtung der Rohrachse gedrückt wird,
   – daß die Halterung (16) mehrere um den Umfang des Rohrkörpers (2) verteilte Stangen (22) umfaßt, die an der Gehäusewand (3) befestigt sind und sich parallel zur Rohrachse durch Bohrungen (21) eines den Gegen-Dichtungsring (18) tragenden Halteringes (20) erstrecken und
   – daß die Stangen von Federn (23) umgeben sind, die sich einerseits an der Gehäusewand (3) und andererseits an dem Haltering (20) abstützen.

2. Dichtung nach Anspruch 1, **dadurch gekennzeichnet,** daß der Balg (34) an mindestens einem Ende (40) an einem Flansch (46) mit einer radialen Befestigungsebene angebracht ist.

EP 0 255 662 B1

3. Dichtung nach Anspruch 1 oder 2 , **dadurch gekennzeichnet,** daß der Balg (34) aus Kunststoff besteht und unter Zwischenlage von formgebenden Zwischenblechen (35, 36; 41, 42) festgeklemmt ist.

4. Dichtung nach Anspruch 1, 2 oder 3, **dadurch gekennzeichnet,** daß ein Dichtungsring (18) mit einer Schmiernut (50) an der Dichtungsfläche (15) versehen ist.

5. Dichtung nach Anspruch 4 , **dadurch gekennzeichnet,** daß die Schmiernut (50) mit einem zur Außenseite des Dichtungsringes (18) führenden Schmierkanal (48) versehen ist.

6. Dichtung nach Anspruch 1 oder einem der folgenden, **dadurch gekennzeichnet,** daß der Dichtungsring (8) an dem Rohrkörper (2) mit einem diesen umgebenden Rohrstück (14) befestigt, dessen Länge in Richtung der Rohrachse mehrfach größer als die Dicke des Dichtungsringes (8) ist.

7. Dichtung nach Anspruch 1 oder einem der folgenden, **dadurch gekennzeichnet,** daß der Balg ein Metallbalg (52) ist und die Feder bildet.

## Revendications

1. Joint d'étanchéité pour une enveloppe enfermant un corps tournant, notamment pour un four à tambour d'installations de pyrolyse, avec des pièces d'étanchéité s'appliquant sous la poussée d'un ressort, un anneau d'étanchéité (8) entourant concentriquement le corps et étant fixé à celui-ci par une surface d'étanchéité (15) perpendiculaire à l'axe du corps, un dispositif de fixation (16) d'un anneau antagoniste d'étanchéité (18), ce dispositif étant mobile parallèlement à l'axe du corps, étant fixé à l'enveloppe (1) à distance de la paroi (3) de celle-ci et un espace intermédiaire compris entre l'anneau antagoniste d'étanchéité (18) et la paroi de l'enveloppe (3) étant fermé de manière étanche par un soufflet (34, 52) entourant le corps (2), caractérisé en ce que,
   – le corps est un corps tubulaire (2) et l'anneau antagoniste d'étanchéité (18) est poussé par un ressort dans la direction de l'axe du tube,
   – le dispositif de fixation (16) comprend plusieurs barres (22) réparties sur la périphérie du corps tubulaire, fixées à la paroi de l'enveloppe (3) et s'étendant parallèlement à l'axe du tube dans des perçages (21) d'un anneau de maintien (20), portant l'anneau antagoniste d'étanchéité (18), et
   – les barres sont entourées de ressorts (23) qui s'appuient d'une part sur la paroi de l'enveloppe (3) et, d'autre part, sur l'anneau de maintien (20).

2. Joint d'étanchéité suivant la revendication 1, caractérisé en ce que le soufflet (34) est fixé au moins à une extrémité (40) à une bride (46) ayant un plan de fixation radiale.

3. Joint d'étanchéité suivant la revendication 1 ou 2, caractérisé en ce que le soufflet (34) est en matière plastique et est maintenu par coincement, avec interposition de tôle intermédiaire de conformation (35, 36; 41, 42).

4. Joint d'étanchéité suivant la revendication 1, 2 ou 3, caractérisé en ce qu'un anneau d'étanchéité (18) est muni d'une gorge de lubrification (50) sur la surface d'étanchéité (15).

5. Joint d'étanchéité suivant la revendication 4, caractérisé en ce que la gorge de lubrification (50) est munie d'un canal de lubrification (48) menant au côté extérieur de l'anneau d'étanchéité (18).

6. Joint d'étanchéité suivant la revendication 1 ou l'une des suivantes, caractérisé en ce que l'anneau d'étanchéité (8) est fixé au corps tubulaire (2) par un tronçon tubulaire (14) entourant celui-ci et dont la longueur, dans la direction de l'axe du tube, est plusieurs fois plus grande que l'épaisseur de l'anneau d'étanchéité (8).

7. Joint d'étanchéité suivant la revendication 1 ou l'une des suivantes, caractérisé en ce que le soufflet est un soufflet métallique (52) et forme le ressort.

## Claims

1. Sealing for a housing, enclosing a rotatable body, more particularly for a drum furnace in pyrolytic installations, with sealing bodies resting under spring pressure, whereby on the body a sealing ring (8) is secured, surrounding this in a concentric manner, with a sealing surface (15) at right angles to the body axis, whereby on the housing (1) a support (16) is secured, movable parallel to the body axis, for a counter sealing ring (18) at a distance from the housing wall (3), and whereby an intermediate space between the counter sealing ring (18) and the housing wall (3) is tightly closed with a bellows (34, 52) surrounding the body (2), characterized in that
   – the body is a pipe body (2) and the counter sealing ring (18) is pressed under spring pressure in the direction of the pipe axis,
   – the support (16) comprises several rods (22) distributed around the circumference of the pipe body (2), the rods being secured onto the housing wall (3) and extending parallel to the pipe axis through boreholes (21) of a holding ring (20) carrying the counter sealing ring (18) and
   – the rods are surrounded by springs (23) which are supported at one end on the housing wall (3) and at the other end on the holding ring (20).

2. Sealing according to claim 1, characterized in that the bellows (34) is attached at least at one end (40) to a flange (46) with a radial securing plane.

3. Sealing according to claim 1 or 2, characterized in that the bellows (34) consists of synthetic material and is rigidly clamped beneath intermediate layers of molded intermediate sheets (35, 36; 41, 42).

4. Sealing according to claim 1, 2 or 3, characterized in that a sealing ring (18) is provided with an oil groove (50) on the sealing surface (15).

5. Sealing according to claim 4, characterized in that the oil groove (50) is provided with an oil channel (48) leading to the outer side of the sealing ring (18).

6. Sealing according to claim 1 or one of the following ones, characterized in that the sealing ring (8) is secured onto the pipe body (2) with a pipe segment (14) surrounding this, the length of which in the direction of the pipe axis is several times greater than the thickness of the sealing ring (8).

7. Sealing according to claim 1 or one of the following ones, characterized in that the bellows is a metal bellows (52) and forms the spring.

FIG 1

FIG 2